# EUROPÄISCHE PATENTSCHRIFT

(11) **EP 3 684 992 B1**
(45) Veröffentlichungstag und Bekanntmachung des Hinweises auf die Patenterteilung: **08.09.2021**
(21) Anmeldenummer: 18773419.9
(22) Anmeldetag: 19.09.2018
(51) Int. Cl.: E05B 17/20, E05B 63/12, E05B 65/02, E05B 15/02, H02B 1/38, E05B 65/10, E05C 3/04, E05B 15/10, E05B 17/00

(54) **SCHALTSCHRANK MIT VERBESSERTER SCHLIESSMECHANIK**
SWITCH CABINET HAVING IMPROVED LOCKING MECHANISM
ARMOIRE ÉLECTRIQUE AVEC MÉCANISME DE FERMETURE AMÉLIORÉ

(30) Priorität: 20.09.2017 DE 102017121787
(43) Veröffentlichungstag der Anmeldung: 29.07.2020
(73) Patentinhaber: Eaton Intelligent Power Limited, 4 Dublin (IE)
(72) Erfinder: WEIGL, Franz, 3961 Waldenstein (AT)
(74) Vertreter: Eaton IP Group EMEA
(86) Internationale Anmeldenummer: PCT/EP2018/075281
(87) Internationale Veröffentlichungsnummer: WO 2019/057739

(56) Entgegenhaltungen:
- EP-A1- 1 445 403
- DE-A1- 19 549 110
- DE-A1-102012 023 087
- DE-C- 556 226
- GB-A- 2 522 238

## Beschreibung

### TECHNISCHES GEBIET

Die Erfindung betrifft einen Schaltschrank, welcher einen Rahmen umfasst, eine gegenüber dem Rahmen bewegliche Tür, ein Schloss mit einem darin drehbar gelagerten Riegel und ein mit dem Riegel wirkverbundenes Haltelement, das den Riegel in seiner Sperrstellung in einer Öffnungsrichtung der Tür überdeckt und eine Öffnung der Tür verhindert.

### STAND DER TECHNIK

Ein solcher Schaltschrank ist aus dem Stand der Technik grundsätzlich bekannt. Dabei blockiert der Riegel in seiner Sperrstellung die Tür und verhindert, dass diese unbeabsichtigt aufgeht.

In aller Regel ist das Schaltschrankinnere keinen besonderen Umweltbedingungen ausgesetzt. Insbesondere wenn die Drehachse einer Tür vertikal ausgerichtet ist, können der Riegel und das Haltelement sehr fragil ausgeführt sein, da praktisch keine Kraft zum Geschlossenhalten der Tür erforderlich ist.

Bei Schaltschränken mit elektrischen Einrichtungen können zeitweilig jedoch extreme Umweltbedingungen im Schaltschrankinneren auftreten, beispielsweise wenn betriebsbedingt ein Schaltlichtbogen oder ungewollt ein Störlichtbogen auftritt, der die im Schaltschrankinneren befindliche Luft in kurzer Zeit aufheizt, sodass sich diese explosionsartig ausdehnt. Auch bei den in diesen Störfällen hohen, auf die Schaltschranktür wirkenden, Drücken muss die Tür durch den Riegel beziehungsweise das Halteelement sicher geschlossen gehalten werden, um eine Verletzung von Personen und eine Beschädigung von Einrichtungen, die sich vor dem Schaltschrank befinden, zu vermeiden.

Problematisch ist dabei, dass insbesondere die Schaltschranktür in aller Regel aus möglichst dünnem Material gefertigt ist, um das Gewicht des Schaltschranks niedrig zu halten. Bei einer hohen Druckbelastung auf die Tür kann diese im Speziellen im Bereich des Schlosses/Halteelements stark verformt werden, oder das Schloss/Halteelement kann im schlimmsten Fall auch aus der Türe ausreißen. Desweiteren kann der Riegel auch aus dem Halteelement herausrutschen, wenn der Riegel bei hohen Drücken stark verformt wird. Eine bloß elastische Verformung des Rahmens, der Tür, des Schlosses, des Riegels und des Haltelement kann dabei ausreichend sein.

Erschwerend kommt generell dazu, dass die Energiedichte bezogen auf das Schaltschrankvolumen gegenüber der Vergangenheit stark angestiegen ist und die erwähnten Probleme nun daher verstärkt auftreten. Nach dem Stand der Technik wird eine Schaltschranktür daher häufig an mehreren Stellen verriegelt. Nachteilig ist dabei, dass durch die Verwendung mehrerer Schlösser sowohl die Herstellung des Schaltschranks als auch das Verschließen und Öffnen des Schaltschranks vergleichsweise aufwändig ist.

Ähnliche Erwägungen wie sie für die Schaltschranktür dargelegt wurden, gelten auch für den Rahmen des Schaltschranks. Auch dieser wird durch die hohen Drücke in Mitleidenschaft gezogen, beziehungsweise ist dessen Herstellung bei der Verwendung mehrerer Schlösser ebenfalls vergleichsweise aufwändig.

Die DE 195 49 110 offenbart zudem ein Schloss mit einem Schließblech, wobei das an einer Tür befestigbare Schloss einen Riegel aufweist, der in eine Riegeleingriffsöffnung eines an einer Zarge befestigbaren Schließbleches eingreift. Um die Einbruchssicherheit zu erhöhen, ist vorgesehen, dass die der Türöffnungsrichtung abgewandte Breitseite des Riegels im Bereich des freien Riegelendes eine Stufe aufweist und dass der der Türöffnungsrichtung abgewandte Rand der Riegeleintrittsöffnung einen rückwärtigen Vorsprung aufweist, hinter welcher sich der Riegel dann verhaken kann.

Die EP 1 445 403 A1 offenbart darüber hinaus ein Verriegelungssystem für Fenster, Türen oder dergleichen, welches ein Schließblech und ein damit zusammenwirkendes, bewegliches Verriegelungselement wie eine Sperrklinke, eine Ratsche oder dergleichen umfasst. Darüber hinaus weist das Verriegelungssystem Mittel auf, welche das Schließblech und das Verriegelungselement in Eingriff bringen, wenn eine Kraft auf das Verriegelungselement in zumindest teilweise seitlicher Richtung ausgeübt wird.

### OFFENBARUNG DER ERFINDUNG

Eine Aufgabe der Erfindung ist es daher, einen verbesserten Schaltschrank anzugeben. Insbesondere soll eine starke Verformung der Tür und des Rahmens im Bereich des Schlosses/Halteelements beziehungsweise ein Ausreißen des Schlosses/Halteelements aus der Tür oder dem Rahmen auch bei hohen, im Schaltschrankinneren auftretenden, Drücken vermieden werden.

Diese Aufgabe wird mit einem Schaltschrank der eingangs genannten Art gelöst, bei dem
- der in einer Sperrstellung befindliche Riegel bei einer Bewegung der Tür in Öffnungsrichtung an einer ersten Verriegelungsfläche und einer zweiten Verriegelungsfläche des Halteelements zu liegen kommt,
- die erste Verriegelungsfläche näher am Schloss angeordnet ist als die zweite Verriegelungsfläche und
- die erste Verriegelungsfläche und die zweite Verriegelungsfläche entgegengesetzt orientiert und bezogen auf die Öffnungsrichtung der Tür an gegenüberliegenden Seiten des Riegels angeordnet sind,
- die erste Verriegelungsfläche und/oder die zweite Verriegelungsfläche in einer Drehachse des Riegels gesehen spiralförmig verläuft oder zueinander winkelig angeordnete gerade Abschnitte aufweist, die eine Spiralform annähern.

Durch die vorgeschlagenen Maßnahmen wird eine Biegebelastung der Tür und des Rahmens im Bereich des Schlosses/Halteelements reduziert oder sogar ganz vermieden. Stattdessen werden diese Bereiche vorwiegend oder ausschließlich auf Scherung oder Zug belastet. Dadurch kann eine starke Verformung der Tür und des Rahmens im Bereich des Schlosses/Halteelements, beziehungsweise ein Ausreißen des Schlosses/Halteelements aus der Tür oder dem Rahmen auch bei hohen, im Schaltschrankinneren auftretenden, Drücken vermieden werden. Desweiteren wird durch die verringerte Biegebelastung des Riegels auch ein Herausrutschen desselben aus dem Halteelement vermieden, das bei Anordnungen nach dem Stand der Technik bei hohen Drücken wegen der Verformung des Riegels auftreten kann. Schließlich kann auch die Anzahl der verwendeten Schlösser gering gehalten werden, wodurch sowohl die Herstellung des Schaltschranks als auch das Verschließen und Öffnen des Schaltschranks vergleichsweise einfach ist. Insgesamt kann der Schaltschrank durch die vorgeschlagenen Maßnahmen trotz vergleichsweise einfachem Aufbau und fragiler Bauweise hohen Drücken standhalten.

Dadurch, dass die erste Verriegelungsfläche und/oder die zweite Verriegelungsfläche in einer Drehachse des Riegels gesehen spiralförmig verläuft oder zueinander winkelig angeordnete gerade Abschnitte aufweist, die eine Spiralform annähern, vergrößert sich der Abstand zwischen einem Berührpunkt des Riegels mit der ersten/zweiten Verriegelungsfläche und dem Schloss bei einer Bewegung des Riegels von einer Sperrstellung in eine Offenstellung. Mit anderen Worten öffnet sich die erste/zweite Verriegelungsfläche bei einer Bewegung des Riegels von einer Sperrstellung in eine Offenstellung keilförmig, beziehungsweise wandert der Berührpunkt des Riegels mit der ersten/zweiten Verriegelungsfläche beim Verriegeln der Tür nach innen (das heißt zum Schloss hin). Wegen der in der Offenstellung des Riegels relativ weit weg vom Schloss liegenden Einlaufkante der ersten/zweiten Verriegelungsfläche wird für das Verschließen des Schaltschranks nur geringer Kraftaufwand benötigt. Insbesondere betrifft dies einen Fall, bei dem der Riegel sowohl die erste Verriegelungsfläche als auch die zweite Verriegelungsfläche bereits bei geringem Druck im Schaltschrankinneren berührt und der Riegel dementsprechend vorgespannt wird. Die zum Vorspannen des Riegels nötige Kraft wird beim Drehen des Riegels in die Schließstellung nach und nach aufgebaut. Trotz der relativ weit außen liegenden Einlaufkante der ersten/zweiten Verriegelungsfläche ist das vom Riegel in der Schließstellung auf das Schloss wirkende Drehmoment gering. Zudem kann die Baugröße des Halteelements wegen der besonderen Formgebung der ersten/zweiten Verriegelungsfläche klein gehalten werden, wodurch sich diese Bauform insbesondere für beengte Platzverhältnisse eignet.

Im Speziellen eignet sich die Erfindung für einen elektrischen Schaltschrank, also einen Schaltschrank mit elektrischen Einrichtungen, zum Beispiel Schaltgeräten. Der Riegel ist im Speziellen aus Stahl gefertigt. Er kann aber auch aus einem anderen Material bestehen, insbesondere aus einem Material mit relativ kleinem Elastizitätsmodul. Beispielsweise kommen dafür Aluminium und Kunststoffe in Betracht, insbesondere faserverstärkte Kunststoffe.

Das Halteelement kann insbesondere als Haltebügel ausgeführt sein. Er kann aber auch einen Haltewinkel umfassen oder als Kombination von Haltewinkel und Haltebügel ausgeführt sein.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn
- das Schloss an der Tür und das Halteelement am Rahmen des Schaltschranks angeordnet ist und
- die erste Verriegelungsfläche des Halteelements in ein Schaltschrankinneres und die zweite Verriegelungsfläche des Halteelements vom Schaltschrankinneren weg weist.

Dadurch kann die Tür gegebenenfalls durch Ziehen am Schloss oder am Schlüssel geöffnet werden. Die Betätigung der Tür ist daher besonders intuitiv.

Günstig ist es aber auch, wenn
- das Schloss am Rahmen und das Halteelement an der Tür des Schaltschranks angeordnet ist und
- die erste Verriegelungsfläche des Halteelements von einem Schaltschrankinneren weg und die zweite Verriegelungsfläche des Halteelements in das Schaltschrankinnere weist.

Dadurch kann das Schloss gegebenenfalls am Rahmen des Schaltschranks befestigt werden, der in der Regel eine höhere Steifigkeit aufweist als die Tür. Die Gefahr, dass der Rahmen im Bereich des Schlosses verformt wird, ist daher relativ gering. Vorteilhaft ist es, wenn der Riegel die erste und zweite Verriegelungsfläche in seiner Sperrstellung über einem Grenzwert eines im Schaltschrankinneren und gleichmäßig auf die Tür wirkenden Drucks von kleiner gleich 10 Pa berührt. Mit anderen Worten berührt der Riegel in seiner Sperrstellung die erste und zweite Verriegelungsfläche spätestens ab einem im Schaltschrankinneren und gleichmäßig auf die Tür wirkenden Druck von 10 Pa und darüber. Die erfindungsgemäßen Wirkungen treten daher bereits bei sehr geringem Druck ein, wodurch die Belastung auf den Rahmen, die Tür, das Schloss, den Riegel und das Haltelement gering gehalten werden können. Dies kann zum Beispiel dadurch erreicht werden, dass der Riegel in seiner Lagerung etwas Spiel hat, und bei nur geringem auf die Tür wirkenden Druck in Kontakt mit der ersten und der zweiten Verriegelungsfläche kommt.

Besonders vorteilhaft ist es auch, wenn der Riegel die erste und zweite Verriegelungsfläche in seiner Sperrstellung bei drucklosem Schaltschrankinneren berührt. Mit anderen Worten wird der Riegel vorgespannt, sodass die erfindungsgemäßen Wirkungen sofort bei Auftreten eines Innendrucks eintreten, wodurch die Belastung auf den Rahmen, die Tür, das Schloss, den Riegel und das Haltelement noch weiter verringert werden können. Dies kann zum Beispiel dadurch erreicht werden, dass die Tür durch eine zwischen Tür und Rahmen angeordnete Dichtung nach außen gedrückt wird.

Vorteilhaft ist es aber auch, wenn der Riegel die erste und zweite Verriegelungsfläche in seiner Sperrstellung über einem Grenzwert eines im Schaltschrankinneren und gleichmäßig auf die Tür wirkenden Drucks von größer gleich 100 Pa berührt. Mit anderen Worten berührt der der Riegel in seiner Sperrstellung die erste und zweite Verriegelungsfläche frühestens ab einem im Schaltschrankinneren und gleichmäßig auf die Tür wirkenden Druck von 100 Pa und darüber. Dies kann zum Beispiel dadurch realisiert sein, dass der Riegel relativ steif und/oder spielfrei im Schloss gelagert ist. Dadurch dass der Riegel bei drucklosem Schaltschrank nicht beide Verriegelungsflächen berührt beziehungsweise Spiel zwischen dem Riegel und den Verriegelungsflächen vorhanden ist, wird für das Verschließen des Schaltschranks nur geringer Kraftaufwand benötigt.

Günstig ist es, wenn der Riegel einen Querschnitt mit einer Höhe von 15-35 mm und eine Dicke von 2-10 mm aufweist, wobei die Dicke in Öffnungsrichtung der Tür und die Höhe rechtwinkelig dazu ausgerichtet ist. Dadurch ist der Riegel für die meisten in einem Schaltschrank auftretenden Belastungen geeignet.

Günstig ist es weiterhin, wenn der Riegel ein axiales Widerstandsmoment um eine in Hochrichtung ausgerichtete Achse von 10 - 60 mm³ aufweist. Dadurch ist der Riegel ebenfalls für die meisten in einem Schaltschrank auftretenden Belastungen geeignet.

Besonders vorteilhaft ist es, wenn der Riegel um eine quer zur Öffnungsrichtung der Tür ausgerichtete Achse drehbar mit dem Schloss verbunden ist. Auf diese Weise kann eine Drehmomentübertragung vom Riegel auf das Schloss bis auf vernachlässigbare Lagerkräfte völlig ausgeschlossen werden. Es werden somit lediglich Zug- oder Druckkräfte auf das Schloss übertragen. Eine Deformation der Tür oder des Rahmens, in die oder den das Schloss eingebaut ist, ist daher besonders gering.

Besonders vorteilhaft ist es auch, wenn der Querschnitt des Riegels zwischen dem Schloss und der ersten Verriegelungsfläche verjüngt ist. Auch auf diese Weise kann eine Drehmomentübertragung vom Riegel auf das Schloss gering gehalten werden, wodurch auch eine Deformation der Tür oder des Rahmens, in die oder den das Schloss eingebaut ist, nur gering ist. Die Verjüngung kann durch eine Kerbe im Riegel gebildet sein, die vorzugsweise nahe am Schloss vorgesehen ist. Im Speziellen ist der Abstand zwischen Kerbe und Schloss kleiner als 10 mm. Die Kerbe ist insbesondere in einer bei Druckbelastung auf die Tür wirksamen Biegeebene ausgerichtet.

Die oben angeführten Vorteile gelten sinngemäß. Sinngemäß gelten auch die zur Erfindung gemäß Patentanspruch 1 offenbarten Ausführungsvarianten und die daraus resultierenden Vorteile. Insbesondere betrifft dies die Ausführungen nach den Patentansprüchen 2, 3, 7 und 8. Dementsprechend ist es von Vorteil, wenn
- das Schloss an der Tür und das Halteelement am Rahmen des Schaltschranks angeordnet ist und
- die erste Verriegelungsfläche des Halteelements in ein Schaltschrankinneres weist oder wenn
- das Schloss am Rahmen und das Halteelement an der Tür des Schaltschranks angeordnet ist und
- die erste Verriegelungsfläche des Halteelements von einem Schaltschrankinneren weg weist oder wenn
- der Riegel einen Querschnitt mit einer Höhe von 15-35 mm und eine Dicke von 2-10 mm aufweist, wobei die Dicke in Öffnungsrichtung der Tür und die Höhe rechtwinkelig dazu ausgerichtet ist, oder wenn
der Riegel ein axiales Widerstandsmoment um eine in Hochrichtung ausgerichtete Achse von 10 - 60 mm³ aufweist.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Fig. 1: einen beispielshaften Schaltschrank in Schrägansicht;
- Fig. 2: einen Ausschnitt aus einem beispielshaften Schaltschrank von schräg innen gesehen;
- Fig. 3: eine Detailansicht einer ersten Türverriegelung;
- Fig. 4: eine Detailansicht einer zweiten Türverriegelung;
- Fig. 5: einen Querschnitt (Horizontalschnitt) durch die erste Türverriegelung;
- Fig. 6: wie Fig. 5, nur mit eingezeichneten, Drücken, Kräften und Drehmomenten;
- Fig. 7: einen Riegel mit einer Querschnittsverjüngung im Bereich des Schlosses;
- Fig. 8: einen Riegel mit einem Drehgelenk im Bereich des Schlosses;
- Fig. 9: eine Anordnung, bei der das Schloss im Rahmen des Schaltschranks und das Halteelement an der Tür befestigt ist
- Fig. 10: eine (nicht erfindungsgemäße) Anordnung, bei welcher der Riegel verschiebbar im Schloss gelagert ist;
- Fig. 11: eine Anordnung, bei der die erste Verriegelungsfläche eine angenäherte Spiralform aufweist;
- Fig. 12: die Anordnung aus Fig. 11 im Schnitt;
- Fig. 13: eine Anordnung mit einer besonders nahe am Schloss angeordneten ersten Verriegelungsfläche in Vorderansicht und
- Fig. 14: die in Fig. 13 dargestellte Anordnung in Seitenansicht.

### DETAILIERTE BESCHREIBUNG DER ERFINDUNG

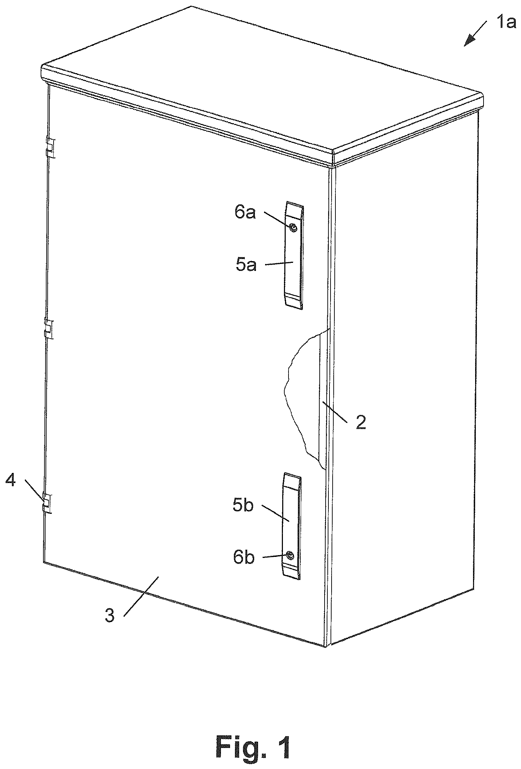

Im Folgenden werden gleiche oder ähnliche Teile in den unterschiedlichen Ausführungsformen mit gleichen oder ähnlichen Bezugszeichen und Bezeichnungen versehen werden. Die auf gleiche oder ähnliche Teile bezogene Offenbarungen sind demgemäß untereinander austauschbar. Lageangaben, wie zum Beispiel "oben", "unten", "seitlich" usw. auf die unmittelbar beschriebene sowie dargestellte Figur bezogen und bei einer Lageänderung sinngemäß auf die neue Lage zu übertragen. Fig. 1 zeigt einen beispielhaften Schaltschrank 1a, welcher einen Rahmen 2 sowie eine gegenüber dem Rahmen 2 bewegliche Tür 3 aufweist. Konkret ist die Tür 3 mit Hilfe der Scharniere 4 drehbar mit dem Rahmen 2 verbunden und somit um eine Hochachse schwenkbar. An der Tür 3 sind in diesem Beispiel zwei Griffe 5a, 5b befestigt, die jeweils ein Schloss 6a, 6b aufweisen.

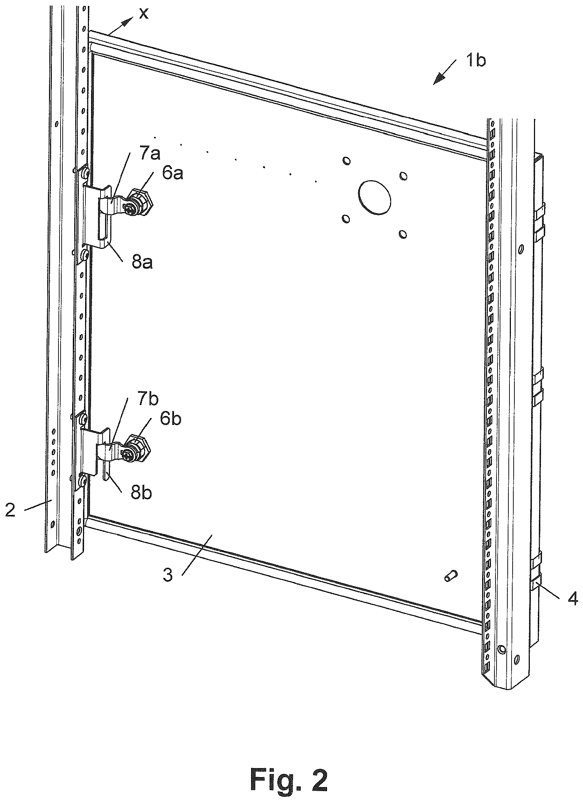

Fig. 2 zeigt eine Innenansicht eines beispielhaften Schaltschranks 1b, welcher ebenfalls einen Rahmen 2 sowie eine mit Hilfe von Scharnieren 4 gegenüber dem Rahmen 2 bewegliche Tür 3 aufweist. An der Tür 3 sind wiederum zwei Schlösser 6a, 6b befestigt, die jeweils einen bewegbaren Riegel 7a, 7b aufweisen. Des Weiteren umfasst der Schaltschrank 1b mit den Riegeln 7a, 7b wirkverbundene Haltelemente 8a, 8b, welche die Riegel 7a, 7b in der Sperrstellung in einer Öffnungsrichtung s der Tür 3 überdecken und so eine Öffnung der Tür 3 verhindern.

Die Riegel 7a, 7b sind im Speziellen aus Stahl gefertigt. Sie können aber auch aus einem anderen Material bestehen, insbesondere aus einem Material mit relativ kleinem Elastizitätsmodul. Beispielsweise kommen dafür Aluminium und Kunststoffe in Betracht, insbesondere faserverstärkte Kunststoffe.

In der Fig. 2 sind zwei verschiedene Haltelemente 8a, 8b dargestellt, um zu verdeutlichen, dass die Erfindung nicht an eine bestimmte Form eines Haltelements 8a, 8b gebunden ist. Selbstverständlich können an einem Schaltschrank aber auch gleichartige Haltelemente 8a, 8b eingesetzt werden. Das Halteelement 8a ist als geschlossener Haltebügel ausgeführt, das Halteelement 8b als offener Haltebügel.

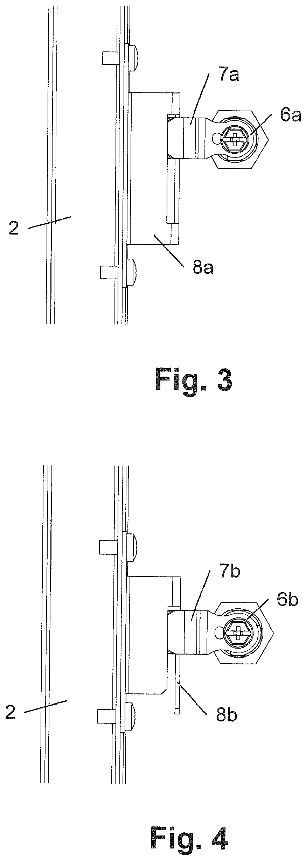

Die Fig. 3 zeigt das Schloss 6a mit dem Riegel 7a und dem Halteelement 8a in Detailansicht von innen. Gut zu erkennen ist, dass das Haltelement 8a einen geschlossenen Haltebügel aufweist.

Die Fig. 4 zeigt das Schloss 6b mit dem Riegel 7b und dem Halteelement 8b in Detailansicht von innen. Gut zu erkennen ist, dass das Haltelement 8b einen offenen Haltebügel aufweist.

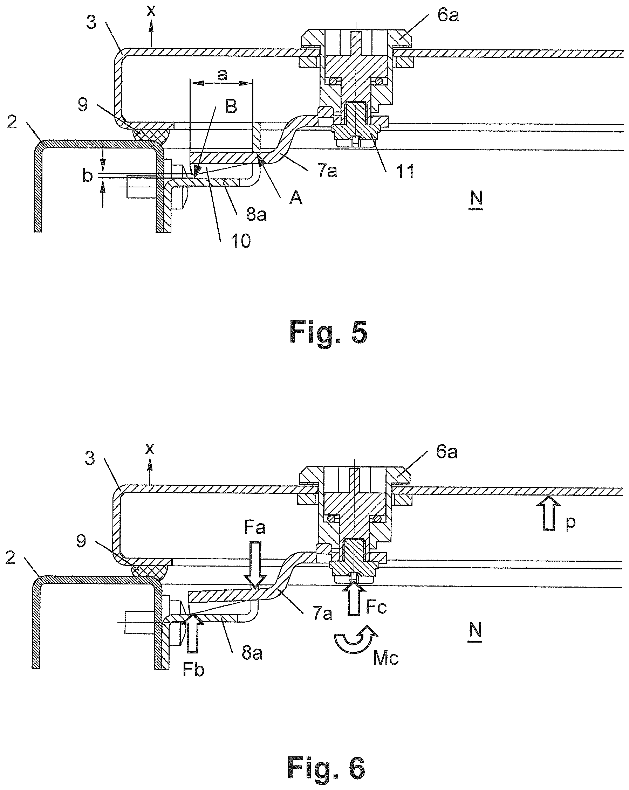

Die Fig. 5 zeigt nun einen Querschnitt durch einen Teil des Schaltschranks 1b. Zwischen dem Rahmen 2 und der Tür 3 ist in dieser Ansicht eine Dichtung 9 erkennbar, welche die Tür 3 im geschlossenen Zustand leicht in Öffnungsrichtung x drückt. Der Riegel 7a ist in diesem Beispiel abgewinkelt beziehungsweise gekröpft, er könnte grundsätzlich aber auch gerade ausgebildet sein. Darüber hinaus weist der Riegel 7a auch einen Vorsprung 10 auf, der beispielsweise durch Verbiegen oder Verdrehen des Riegels 7a hergestellt sein kann.

Bei einer Bewegung der Tür 3 in Öffnungsrichtung x kommt der in der Sperrstellung befindliche Riegel 7a an einer ersten Verriegelungsfläche A des Halteelements 8a zu liegen. In der Fig. 5 ist dies der Fall, da die Tür 3 durch die Dichtung 9 etwas in Öffnungsrichtung x gedrückt wird.

Wird die Tür 3 noch stärker in Öffnungsrichtung x gedrückt, etwa weil der im Schaltschrankinneren N und damit der auf die Tür 3 wirkende Druck p ansteigt, so wird der Riegel 3 etwas verbogen, sodass dieser auch an einer zweiten Verriegelungsfläche B des Halteelements 8a zu liegen kommt. Die erste Verriegelungsfläche A ist dabei näher am Schloss 6a, 6b angeordnet als die zweite Verriegelungsfläche B, und die erste Verriegelungsfläche A und die zweite Verriegelungsfläche B sind entgegengesetzt orientiert und bezogen auf die Öffnungsrichtung x der Tür 3 an gegenüberliegenden Seiten des Riegels 7a angeordnet. Dieser Zustand ist in der Fig. 6 dargestellt.

Es ergibt sich somit zusammenfassend ein Schaltschrank 1a, 1b, der einen Rahmen 2 umfasst, eine gegenüber dem Rahmen 2 bewegliche Tür 3, ein Schloss 6a, 6b mit einem bewegbaren Riegel 7a, 7b und ein mit dem Riegel 7a, 7b wirkverbundenes Haltelement 8a, 8b, das den Riegel 7a, 7b in seiner Sperrstellung in einer Öffnungsrichtung der Tür 3 überdeckt und eine Öffnung der Tür 3 verhindert. Der in einer Sperrstellung befindliche Riegel 7a, 7b kommt bei einer Bewegung der Tür 3 in Öffnungsrichtung x an einer ersten Verriegelungsfläche A und einer zweiten Verriegelungsfläche B des Halteelements 8a, 8b zu liegen. Die erste Verriegelungsfläche A ist dabei näher am Schloss 6a, 6b angeordnet ist als die zweite Verriegelungsfläche B. Die erste Verriegelungsfläche A und die zweite Verriegelungsfläche B sind entgegengesetzt orientiert und bezogen auf die Öffnungsrichtung x der Tür 3 an gegenüberliegenden Seiten des Riegels 7a, 7b angeordnet.

Alternativ kann der Schaltschrank 1a, 1b auch so beschrieben werden, dass dieser wiederum einen Rahmen 2 umfasst, eine gegenüber dem Rahmen bewegliche Tür 3, ein Schloss 6a, 6b mit einem bewegbaren Riegel 7a, 7b und ein mit dem Riegel 7a, 7b wirkverbundenes Haltelement 8a, 8b, das den Riegel 7a, 7b in seiner Sperrstellung in einer Öffnungsrichtung x der Tür 3 überdeckt und eine Öffnung der Tür 3 verhindert, wobei der in einer Sperrstellung befindliche Riegel 7a, 7b bei einer Bewegung der Tür 3 in Öffnungsrichtung x an einer ersten Verriegelungsfläche A des Halteelements 8a, 8b zu liegen kommt, der Riegel 7a, 7b die erste Verriegelungsfläche A in einer vom Schloss 6a, 6b wegweisenden Richtung um eine Länge a von zumindest 20 mm überragt, eine zweite Verriegelungsfläche B in der vom Schloss 6a, 6b wegweisenden Richtung neben der ersten Verriegelungsfläche A angeordnet ist, die erste Verriegelungsfläche A und die zweite Verriegelungsfläche B entgegengesetzt orientiert und bezogen auf die Öffnungsrichtung x der Tür 3 an gegenüberliegenden Seiten des Riegels 7a, 7b angeordnet sind und zwischen dem Riegel 7a, 7b und den beiden Verriegelungsflächen A, B maximal 1 mm Luft b vorgesehen ist. Die Luft b bezeichnet die gesamte Luft zwischen dem Riegel 7a, 7b und den beiden Verriegelungsflächen A, B. Da der Riegel 7a in der Fig. 5 an der ersten Verriegelungsflächen A anliegt, ist die Luft b aber nur zwischen dem Riegel 7a und der zweiten Verriegelungsfläche B sichtbar.

In der Fig. 6 sind zusätzlich symbolhaft die auftretenden Drücke, Kräfte und Drehmomente eingezeichnet. Der auf die Tür 3 wirkende Druck p führt zu einer auf den Riegel 7a wirkenden Kraft Fc. An den beiden Verriegelungsflächen A und B werden die beiden Kräfte Fa und Fb eingeleitet. Zusätzlich wirkt auf den Riegel 7a noch das Drehmoment Mc. Auf das Schloss 6a wirkt demgemäß ein in die Gegenrichtung weisende Drehmoment.

In dem in den Figuren 5 und 6 dargestellten Beispiel berührt der Riegel 7a bei drucklosem Schaltschrankinneneren N nicht beide Verriegelungsflächen A, B, sondern es befindet sich etwas Luft b zwischen dem Riegel 7a und den beiden Verriegelungsflächen A, B. Steigt der Druck p im Schaltschrankinneneren N an, so wird der Riegel 7a verbogen und berührt ab einem bestimmten Grenzwert beide Verriegelungsflächen A, B. Insbesondere kann dieser Grenzwert bei einem Druck p = 100 Pa liegen. Dies kann zum Beispiel dadurch realisiert sein, dass der Riegel 7a relativ steif ist und/oder spielfrei im Schloss 6a gelagert ist. Vorteilhaft wird für das Verschließen des Schaltschranks 1b bei dieser Variante wegen der Luft b nur geringer Kraftaufwand benötigt.

Denkbar wäre aber auch, dass der genannte Grenzwert bei einem Druck p ≤ 10 Pa liegt. Die erfindungsgemäßen Wirkungen treten daher bereits bei sehr geringem Druck p ein, wodurch die Belastung auf den Rahmen 2, die Tür 3, das Schloss 6a, den Riegel 7a und das Haltelement 8a gering gehalten werden können. Insbesondere ist das Drehmoment Mc bei dieser Ausführungsform besonders klein. Dies kann zum Beispiel dadurch erreicht werden, dass der Riegel 7a in seiner Lagerung etwas Spiel hat und/oder relativ biegeweich ist. Zur Erreichung eines Lagerspiels kann beispielsweise die Schraube 11 etwas gelöst werden, sodass der Riegel 7a, praktisch kraftfrei um eine normal auf die Zeichenebene stehende Achse geschwenkt werden kann.

Denkbar wäre auch, dass der Riegel 7a die erste und zweite Verriegelungsfläche A, B in seiner Sperrstellung überhaupt schon bei drucklosem Schaltschrankinneren N berührt. Mit anderen Worten wird der Riegel 7a vorgespannt, sodass die erfindungsgemäßen Wirkungen sofort bei Auftreten eines beliebigen Innendrucks p eintreten, wodurch die Belastung auf den Rahmen 2, die Tür 3, das Schloss 6a, den Riegel 7a und das Haltelement 8a noch weiter verringert werden können. Dies kann zum Beispiel dadurch erreicht werden, dass die Tür 3 durch die Dichtung 9 entsprechend stark nach außen gedrückt wird und dass der Riegel 7a in seiner Lagerung etwas Spiel hat und/oder relativ biegeweich. Auch hier kann das Lagerspiel durch Lösen der Schraube 11 erreicht werden.

Die Kraft Fc, bei welcher der Riegel 7a in Kontakt mit beiden Verriegelungsflächen A, B gelangt, hat direkten Einfluss auf das Drehmoment Mc. Ist die Kraft Fc klein, so ist auch das Drehmoment Mc klein und umgekehrt.

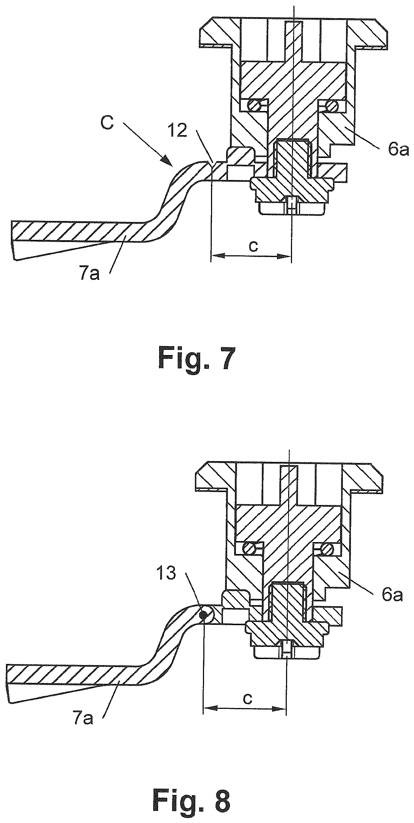

Um den Riegel 7a biegeweich zu gestalten, kann der Querschnitt des Riegels 7a in einem Bereich C zwischen dem Schloss 6a und der ersten Verriegelungsfläche A verjüngt sein. Auch auf diese Weise kann eine Drehmomentübertragung vom Riegel 7a auf das Schloss 6a gering gehalten werden, Die Verjüngung kann beispielsweise durch eine Kerbe 12 im Riegel 7a gebildet sein, die vorzugsweise nahe am Schloss 6a vorgesehen ist, so wie das in Fig. 7 dargestellt ist. Im Speziellen ist der (Mitten)Abstand c zwischen Kerbe 12 und Schloss 6a kleiner als 10 mm. Die Kerbe 12 liegt insbesondere in jener Biegeebene, die bei einer Druckbelastung auf die Tür 3 wirksam ist. Die genannte Biegeebene ist im konkreten Beispiel normal zur Zeichenebene und vertikal ausgerichtet.

Zu demselben Zweck kann der Riegel 7a auch um eine quer zur Öffnungsrichtung x der Tür 3 ausgerichtete Achse 13 drehbar mit dem Schloss 6a verbunden sein. Auf diese Weise kann eine Drehmomentübertragung vom Riegel 7a auf das Schloss 6a bis auf vernachlässigbare Lagerkräfte völlig ausgeschlossen werden. Es werden somit lediglich Zug- oder Druckkräfte auf das Schloss 6a übertragen. Eine Deformation der Tür 3 oder des Rahmens 2, in die oder den das Schloss 6a eingebaut ist, ist daher besonders gering. Im Speziellen ist der (Mitten)Abstand c zwischen der Achse 13 und Schloss 6a wiederum kleiner als 10 mm.

Durch die vorgeschlagenen Maßnahmen kann eine Biegebelastung der Tür 3 im Bereich des Schlosses 6a klein gehalten oder sogar ganz vermieden werden. Stattdessen wird dieser Bereich vorwiegend oder ausschließlich auf Scherung oder Zug belastet. Dadurch kann eine starke Verformung der Tür 3 im Bereich des Schlosses 6a beziehungsweise ein Ausreißen des Schlosses 6a aus der Tür 3 auch bei hohen, im Schaltschrankinneren N auftretenden, Drücken p vermieden werden. Desweiteren wird durch die verringerte Biegebelastung des Riegels 7a auch ein Herausrutschen desselben aus dem Halteelement 8a vermieden.

Durch die vorgeschlagenen Maßnahmen kann auch die Anzahl der verwendeten Schlösser 6a, 6b gering gehalten werden, wodurch sowohl die Herstellung des Schaltschranks 1a, 1b als auch das Verschließen und Öffnen des Schaltschranks 1a, 1b vergleichsweise einfach ist. Insgesamt kann der Schaltschrank 1a, 1b durch die vorgeschlagenen Maßnahmen trotz vergleichsweise einfachem Aufbau und fragiler Bauweise hohen Drücken p standhalten.

Ganz ähnliche Überlegungen gelten auch für das am Rahmen 2 befestigte Halteelement 8a. Auch dieser Befestigungsbereich wird durch die vorgeschlagenen Maßnahmen relativ gering belastet. Das heißt eine Biegebelastung des Rahmens 2 im Bereich des Halteelements 8a kann klein gehalten oder sogar ganz vermieden werden. Stattdessen wird auch dieser Bereich vorwiegend oder ausschließlich auf Scherung oder Zug belastet, wodurch eine starke Verformung des Rahmens 2 im Bereich des Halteelements 8a beziehungsweise ein Ausreißen des Halteelements 8a aus dem Rahmen 2 vermieden wird.

In der in den Figuren 5 und 6 dargestellten Ausführungsvariante ist das Schloss 6a, an der Tür 3 und das Halteelement am 8a Rahmen 2 des Schaltschranks 1b angeordnet, und die erste Verriegelungsfläche A weist in das Schaltschrankinnere N und die zweite Verriegelungsfläche B vom Schaltschrankinneren N weg. Dadurch kann die Tür 3 gegebenenfalls durch Ziehen am Schloss 6a oder am Schlüssel geöffnet werden. Die Betätigung der Tür 3 ist daher besonders intuitiv.

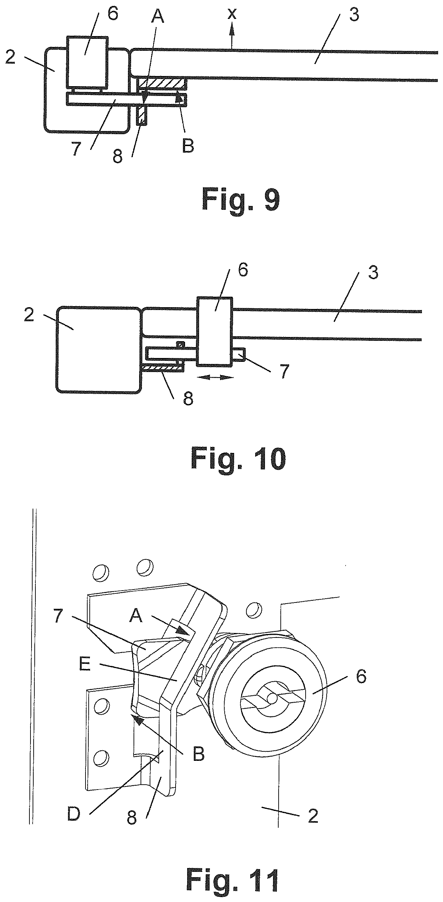

Denkbar ist aber auch, dass das Schloss 6 am Rahmen 2 und das Halteelement 8, an der Tür 3 des Schaltschranks 1a, 1b angeordnet ist und die erste Verriegelungsfläche A von einem Schaltschrankinneren N weg und die zweite Verriegelungsfläche B in das Schaltschrankinnere N weist, so wie das in der Fig. 9 dargestellt ist. Dadurch kann das Schloss 6 gegebenenfalls am Rahmen 2 des Schaltschranks 1a, 1b befestigt werden, der in der Regel eine höhere Steifigkeit aufweist als die Tür 3. Die Gefahr, dass der Rahmen 2 im Bereich des Schlosses 6 verformt wird, ist daher besonders gering.

Generell ist es von Vorteil, wenn der Riegel 7a, 7b einen Querschnitt mit einer Höhe von 15-35 mm und eine Dicke von 2-10 mm aufweist, wobei die Dicke in Öffnungsrichtung x der Tür 3 und die Höhe rechtwinkelig dazu ausgerichtet ist. Alternativ oder zusätzlich ist es generell von Vorteil, wenn der Riegel 7a, 7b ein axiales Widerstandsmoment um eine in Hochrichtung ausgerichtete Achse von 10 - 60 mm³ aufweist. Durch die vorgeschlagenen Maßnahmen ist der Riegel 7a, 7b für die meisten in einem Schaltschrank 1a, 1b auftretenden Belastungen geeignet.

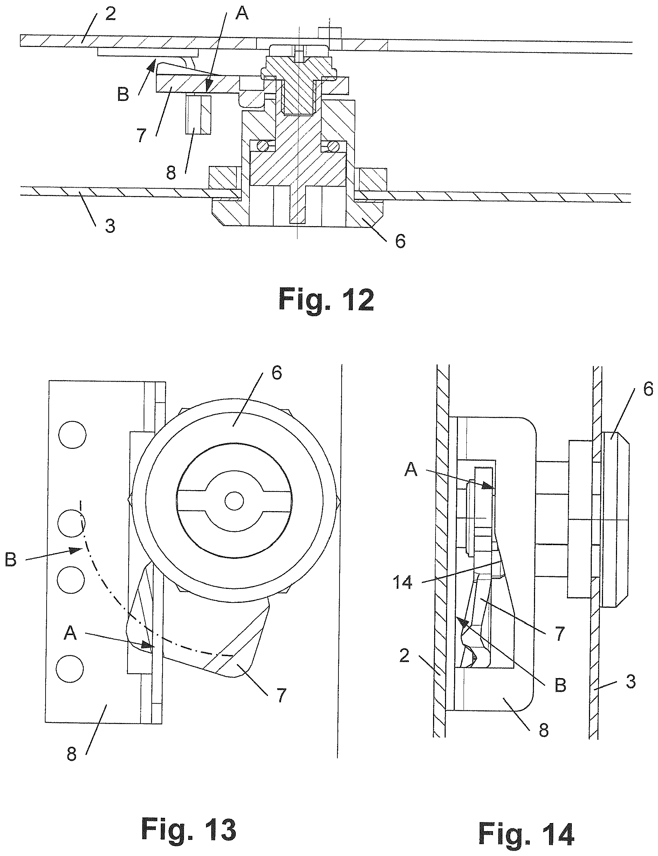

Fig. 11 und 12 zeigen eine erfindungsgemäße Ausführung einer Türverriegelung, Fig. 11 in Schrägansicht und Fig. 12 im Schnitt. Bei dieser Ausführungsvariante weist die erste Verriegelungsfläche A in einer Drehachse des Riegels 7 gesehen zueinander winkelig angeordnete gerade Abschnitte D, E auf, die eine Spiralform annähern. Dadurch vergrößert sich der Abstand zwischen einem Berührpunkt des Riegels 7 mit der ersten Verriegelungsfläche A und dem Schloss 6 bei einer Bewegung des Riegels 7 von einer Sperrstellung in eine Offenstellung. Mit anderen Worten öffnet sich die erste Verriegelungsfläche A bei einer Bewegung des Riegels 7 von einer Sperrstellung in eine Offenstellung keilförmig, beziehungsweise wandert der Berührpunkt des Riegels 7 mit der ersten Verriegelungsfläche A beim Verriegeln der Tür 3 nach innen. Wegen der in der Offenstellung des Riegels 7 relativ weit weg vom Schloss 6 liegenden Einlaufkante der Verriegelungsfläche A wird für das Verschließen des Schaltschranks 1a, 1b nur geringer Kraftaufwand benötigt. Insbesondere betrifft dies eine Ausführungsvariante, bei welcher der Riegel 7 sowohl die erste Verriegelungsfläche A als auch die zweite Verriegelungsfläche B bereits bei geringem Druck p im Schaltschrankinneren N berührt und der Riegel 7 dementsprechend vorgespannt wird. Die zum Vorspannen des Riegels 7 nötige Kraft wird beim Drehen des Riegels 7 in die Schließstellung nach und nach aufgebaut. Trotz der relativ weit außen liegenden Einlaufkante der Verriegelungsfläche A ist das vom Riegel 7 in der Schließstellung auf das Schloss 6 wirkende Drehmoment Mc gering (vergleiche Fig. 6). Zudem kann die Baugröße des Halteelements 8 wegen der besonderen Formgebung der Verriegelungsfläche A klein gehalten werden, wodurch sich diese Bauform insbesondere für beengte Platzverhältnisse eignet. Konkret weist das in der Fig. 11 dargestellte Halteelement 8 eine nur geringe Bauhöhe auf.

Fig. 13 und 14 zeigen schließlich eine weitere Ausführungsform einer Türverriegelung, Fig. 13 in Vorderansicht und Fig. 14 in Seitenansicht. Bei dieser Ausführungsform ist das Halteelement 8 beziehungsweise die erste Verriegelungsfläche A besonders nahe an das Schloss 6 herangerückt. Demgemäß ist ein auf den Riegel 7 wirkendes Drehmoment Mc besonders klein, was zu den bereits beschriebenen Vorteilen führt.

Generell kann die erste Verriegelungsfläche A angeschrägt sein, so wie das in der Fig. 14 dargestellt ist um ein leichtes Verriegeln der Tür 3 zu ermöglichen. Desgleichen können auch der Riegel 7 und die zweite Verriegelungsfläche B angeschrägt sein, so wie das in der Fig. 4 durch die Einlaufschräge 14 verwirklicht ist.

Zusammenfassend wird eine Biegebelastung der Tür 3 und des Rahmens 3 im Bereich des Schlosses 6, 6a, 6b beziehungsweise Halteelements 8, 8a, 8b durch die vorgeschlagenen Maßnahmen reduziert oder sogar ganz vermieden. Dadurch kann eine starke Verformung der Tür 3 und des Rahmens 3 im Bereich des Schlosses 6, 6a, 6b beziehungsweise Halteelements 8, 8a, 8b beziehungsweise ein Ausreißen des Schlosses 6, 6a, 6b beziehungsweise Halteelements 8, 8a, 8b aus der Tür 3 oder dem Rahmen 2 auch bei hohen im Schaltschrankinneren N auftretenden Drücken p vermieden werden. Desweiteren wird durch die verringerte Biegebelastung des Riegels 7, 7a, 7b auch ein Herausrutschen desselben aus dem Halteelement 8, 8a, 8b vermieden. Die Anzahl der verwendeten Schlösser 6, 6a, 6b kann durch die vorgeschlagenen Maßnahmen gering gehalten werden, wodurch sowohl die Herstellung des Schaltschranks 1a, 1b als auch das Verschließen und Öffnen des Schaltschranks 1a, 1b vergleichsweise einfach ist. Insgesamt kann der Schaltschrank 1a, 1b durch die vorgeschlagenen Maßnahmen trotz vergleichsweise einfachem Aufbau und fragiler Bauweise hohen Drücken p standhalten.

Im Speziellen eignet sich die Erfindung für einen elektrischen Schaltschrank 1a, 1b, also einen Schaltschrank 1a, 1b mit elektrischen Einrichtungen, zum Beispiel Schaltgeräten.

Abschließend wird angemerkt, dass der Schaltschrank 1a, 1b respektive dessen Bauteile nicht notwendigerweise maßstäblich dargestellt ist und dieses daher auch andere Proportionen aufweisen kann. Weiterhin kann der Schaltschrank 1a, 1b auch mehr oder weniger Bauteile als dargestellt umfassen.

### Bezugszeichenliste

- 1a, 1b: Schaltschrank
- 2: Rahmen
- 3: Tür
- 4: Scharnier
- 5a, 5b: Griff

- 6, 6a, 6b: Schloss
- 7, 7a, 7b: Riegel
- 8, 8a, 8b: Halteelement
- 9: Dichtung
- 10: Vorsprung

- 11: Schraube
- 12: Kerbe
- 13: Drehachse
- 14: Einlaufschräge

- a: Überstand Riegel
- b: Luft / Spiel
- c: Abstand zwischen Schloss und Kerbe/Drehachse

- A: erste Verriegelungsfläche
- B: zweite Verriegelungsfläche
- C: Bereich für Querschnittsverjüngung
- D, E: gerades Segment erste Verriegelungsfläche

- Fa: Kraft auf Riegel bei erster Verriegelungsfläche
- Fb: Kraft auf Riegel bei zweiter Verriegelungsfläche
- Fc: Kraft auf Riegel bei Schloss
- Mc: Drehmoment auf Riegel bei Schloss

- N: Schaltschrankinneres
- p: Druck im Schaltschrankinneren / auf Tür
- x: Öffnungsrichtung Tür

## Patentansprüche

1. Schaltschrank (1a, 1b), umfassend
- einen Rahmen (2),
- eine gegenüber dem Rahmen (2) bewegliche Tür (3),
- ein Schloss (6, 6a, 6b) mit einem darin drehbar gelagerten Riegel (7, 7a, 7b) und
- ein mit dem Riegel (7, 7a, 7b) wirkverbundenes Haltelement (8, 8a, 8b), das den Riegel (7, 7a, 7b) in seiner Sperrstellung in einer Öffnungsrichtung der Tür (3) überdeckt und eine Öffnung der Tür (3) verhindert,
wobei
- der in einer Sperrstellung befindliche Riegel (7, 7a, 7b) bei einer Bewegung der Tür (3) in Öffnungsrichtung (x) an einer ersten Verriegelungsfläche (A) und einer zweiten Verriegelungsfläche (B) des Halteelements (8, 8a, 8b) zu liegen kommt,
- die erste Verriegelungsfläche (A) näher am Schloss (6, 6a, 6b) angeordnet ist als die zweite Verriegelungsfläche (B) und
- die erste Verriegelungsfläche (A) und die zweite Verriegelungsfläche (B) entgegengesetzt orientiert und bezogen auf die Öffnungsrichtung (x) der Tür (3) an gegenüberliegenden Seiten des Riegels (7, 7a, 7b) angeordnet sind,
**dadurch gekennzeichnet, dass**
- die erste Verriegelungsfläche (A) und/oder die zweite Verriegelungsfläche (B) in einer Drehachse des Riegels (7, 7a, 7b) gesehen spiralförmig verläuft oder zueinander winkelig angeordnete gerade Abschnitte (D, E) aufweist, die eine Spiralform annähern.

2. Schaltschrank (1a, 1b) nach Anspruch 1, **dadurch gekennzeichnet, dass**
- das Schloss (6, 6a, 6b) an der Tür (3) und das Halteelement (8, 8a, 8b) am Rahmen (2) des Schaltschranks (1a, 1b) angeordnet ist und
- die erste Verriegelungsfläche (A) des Halteelements (8, 8a, 8b) in ein Schaltschrankinneres (N) und die zweite Verriegelungsfläche (B) des Halteelements (8, 8a, 8b) vom Schaltschrankinneren (N) weg weist.

3. Schaltschrank (1a, 1b) nach Anspruch 1, **dadurch gekennzeichnet, dass**
- das Schloss (6, 6a, 6b) am Rahmen (2) und das Halteelement (8, 8a, 8b) an der Tür (3) des Schaltschranks (1a, 1b) angeordnet ist und
- die erste Verriegelungsfläche (A) des Halteelements (8, 8a, 8b) von einem Schaltschrankinneren (N) weg und die zweite Verriegelungsfläche (B) des Halteelements (8, 8a, 8b) in das Schaltschrankinnere (N) weist.

4. Schaltschrank (1a, 1b) nach einem der Ansprüche 1 bis 3, **dadurch gekennzeichnet, dass** der Riegel (7, 7a, 7b) die erste und zweite Verriegelungsfläche (A, B) in seiner Sperrstellung über einem Grenzwert eines im Schaltschrankinneren (N) und gleichmäßig auf die Tür (3) wirkenden Drucks (p) von kleiner gleich 10 Pa berührt.

5. Schaltschrank (1a, 1b) nach Anspruch 4, **dadurch gekennzeichnet, dass** der Riegel (7, 7a, 7b) die erste und zweite Verriegelungsfläche (A, B) in seiner Sperrstellung bei drucklosem Schaltschrankinneren (N) berührt.

6. Schaltschrank (1a, 1b) nach einem der Ansprüche 1 bis 3, **dadurch gekennzeichnet, dass** der Riegel (7, 7a, 7b) die erste und zweite Verriegelungsfläche (A, B) in seiner Sperrstellung über einem Grenzwert eines im Schaltschrankinneren (N) und gleichmäßig auf die Tür (3) wirkenden Drucks (p) von größer gleich 100 Pa berührt.

7. Schaltschrank (1a, 1b) nach einem der Ansprüche 1 bis 6, **dadurch gekennzeichnet, dass** der Riegel (7, 7a, 7b) einen Querschnitt mit einer Höhe von 15-35 mm und eine Dicke von 2-10 mm aufweist, wobei die Dicke in Öffnungsrichtung (x) der Tür (3) und die Höhe rechtwinkelig dazu ausgerichtet ist.

8. Schaltschrank (1a, 1b) nach einem der Ansprüche 1 bis 7, **dadurch gekennzeichnet, dass** der Riegel (7, 7a, 7b) ein axiales Widerstandsmoment um eine in Hochrichtung ausgerichtete Achse von 10 - 60 mm³ aufweist.

9. Schaltschrank (1a, 1b) nach einem der Ansprüche 1 bis 8, **dadurch gekennzeichnet, dass** der Riegel (7, 7a, 7b) um eine quer zur Öffnungsrichtung (x) der Tür (3) ausgerichtete Achse (13) drehbar mit dem Schloss (6, 6a, 6b) verbunden ist.

10. Schaltschrank (1a, 1b) nach einem der Ansprüche 1 bis 9, **dadurch gekennzeichnet, dass** der Querschnitt des Riegels (7, 7a, 7b) einem Bereich (C) zwischen dem Schloss (6, 6a, 6b) und der ersten Verriegelungsfläche (A) verjüngt ist.

## Claims

1. Switch cabinet (1a, 1b), comprising
- a frame (2),
- a door (3) that is movable with respect to the frame (2),
- a lock (6, 6a, 6b) with a bolt (7, 7a, 7b) rotatably mounted therein and
- a retaining element (8, 8a, 8b) which is operatively connected to the bolt (7, 7a, 7b) and which covers the bolt (7, 7a, 7b) in its locked position in an opening direction of the door (3) and prevents opening of the door (3),
- the bolt (7, 7a, 7b) located in a locked position coming to rest on a first locking surface (A) and a second locking surface (B) of the retaining element (8, 8a, 8b) when the door (3) is moved in the opening direction (x),
- the first locking surface (A) being arranged closer to the lock (6, 6a, 6b) than the second locking surface (B) and
- the first locking surface (A) and the second locking surface (B) being oriented in opposite directions and being arranged on opposite sides of the bolt (7, 7a, 7b) in relation to the opening direction (x) of the door (3), **characterized in that**
- the first locking surface (A) and/or the second locking surface (B) extends in a spiral when viewed in an axis of rotation of the bolt (7, 7a, 7b) or has straight portions (D, E), arranged at an angle to one another, which approximate a spiral shape.

2. Switch cabinet (1a, 1b) according to claim 1, **characterized in that**
- the lock (6, 6a, 6b) is arranged on the door (3) and the retaining element (8, 8a, 8b) is arranged on the frame (2) of the switch cabinet (1a, 1b) and
- the first locking surface (A) of the retaining element (8, 8a, 8b) faces a switch cabinet interior (N) and the second locking surface (B) of the retaining element (8, 8a, 8b) faces away from the switch cabinet interior (N).

3. Switch cabinet (1a, 1b) according to claim 1, **characterized in that**
- the lock (6, 6a, 6b) is arranged on the frame (2) and the retaining element (8, 8a, 8b) is arranged on the door (3) of the switch cabinet (1a, 1b) and
- the first locking surface (A) of the retaining element (8, 8a, 8b) faces away from a switch cabinet interior (N) and the second locking surface (B) of the retaining element (8, 8a, 8b) faces the switch cabinet interior (N).

4. Switch cabinet (1a, 1b) according to any of claims 1 to 3, **characterized in that** the bolt (7, 7a, 7b) contacts the first and second locking surfaces (A, B) in its locked position above a limit value of a pressure (p), acting uniformly in the switch cabinet interior (N) and on the door (3), of less than or equal to 10 Pa.

5. Switch cabinet (1a, 1b) according to claim 4, **characterized in that** the bolt (7, 7a, 7b) touches the first and second locking surfaces (A, B) in its locked position when the switch cabinet interior (N) is unpressurized.

6. Switch cabinet (1a, 1b) according to any of claims 1 to 3, **characterized in that** the bolt (7, 7a, 7b) contacts the first and second locking surfaces (A, B) in its locked position above a limit value of a pressure (p), acting uniformly in the switch cabinet interior (N) and on the door (3), of greater than or equal to 100 Pa.

7. Switch cabinet (1a, 1b) according to any of claims 1 to 6, **characterized in that** the bolt (7, 7a, 7b) has a cross-section with a height of 15-35 mm and a thickness of 2-10 mm, the thickness being oriented in the opening direction (x) of the door (3) and the height being oriented at a right angle thereto.

8. Switch cabinet (1a, 1b) according to any of claims 1 to 7, **characterized in that** the bolt (7, 7a, 7b) has an axial moment of resistance about an axis oriented in the vertical direction of 10-60 mm³.

9. Switch cabinet (1a, 1b) according to any of claims 1 to 8, **characterized in that** the bolt (7, 7a, 7b) is connected to the lock (6, 6a, 6b) so as to be rotatable about an axis (13) oriented transversely to the opening direction (x) of the door (3).

10. Switch cabinet (1a, 1b) according to any of claims 1 to 9, **characterized in that** the cross-section of the bolt (7, 7a, 7b) is tapered in a region (C) between the lock (6, 6a, 6b) and the first locking surface (A).

## Revendications

1. Armoire de commande (1a, 1b), comprenant
- un cadre (2),
- une porte (3) mobile par rapport au cadre (2),
- une serrure (6, 6a, 6b) comportant un pêne (7, 7a, 7b) monté de manière rotative à l'intérieur de celle-ci et
- un élément de maintien (8, 8a, 8b) relié de manière fonctionnelle au pêne (7, 7a, 7b), qui recouvre le pêne (7, 7a, 7b) dans sa position de blocage dans un sens d'ouverture de la porte (3) et empêche une ouverture de la porte (3), dans laquelle
- le pêne (7, 7a, 7b) se trouvant dans une position de blocage venant se placer sur une première surface de verrouillage (A) et une seconde surface de verrouillage (B) de l'élément de maintien (8, 8a, 8b) lors d'un mouvement de la porte (3) dans le sens d'ouverture (x),
- la première surface de verrouillage (A) est disposée plus près de la serrure (6, 6a, 6b) que la seconde surface de verrouillage (B) et
- la première surface de verrouillage (A) et la seconde surface de verrouillage (B) sont orientées dans des directions opposées et sont disposées sur des côtés opposés du pêne (7, 7a, 7b) par rapport au sens d'ouverture (x) de la porte (3), **caractérisée en ce que**
- la première surface de verrouillage (A) et/ou la seconde surfaces de verrouillage (B) s'étendent en spirale lorsqu'elles sont vues dans un axe de rotation du pêne (7, 7a, 7b) ou présentent des sections droites (D, E) disposées à un angle l'une par rapport à l'autre, lesquelles se rapprochent d'une forme de spirale.

2. Armoire de commande (1a, 1b) selon la revendication 1, **caractérisée en ce que**
- la serrure (6, 6a, 6b) est disposée sur la porte (3) et l'élément de maintien (8, 8a, 8b) est disposé sur le cadre (2) de l'armoire de commande (1a, 1b) et
- la première surface de verrouillage (A) de l'élément de maintien (8, 8a, 8b) est tournée vers un intérieur de l'armoire de commande (N) et la seconde surface de verrouillage (B) de l'élément de maintien (8, 8a, 8b) est tournée à l'opposé de l'intérieur de l'armoire de commande (N).

3. Armoire de commande (1a, 1b) selon la revendication 1, **caractérisée en ce que**
- la serrure (6, 6a, 6b) est disposée sur le cadre (2) et l'élément de maintien (8, 8a, 8b) est disposé sur la porte (3) de l'armoire de commande (1a, 1b) et
- la première surface de verrouillage (A) de l'élément de maintien (8, 8a, 8b) est tournée à l'opposé d'un intérieur de l'armoire de commande (N) et la seconde surface de verrouillage (B) de l'élément de maintien (8, 8a, 8b) est tournée vers l'intérieur de l'armoire de commande (N).

4. Armoire de commande (1a, 1b) selon l'une des revendications 1 à 3, **caractérisée en ce que** le pêne (7, 7a, 7b) est en contact avec les première et seconde surfaces de verrouillage (A, B) dans sa position de blocage au-dessus d'une valeur limite d'une pression (p) inférieure ou égale à 10 Pa et agissant dans l'intérieur de l'armoire de commande (N) et de manière égale sur la porte (3).

5. Armoire de commande (1a, 1b) selon la revendication 4, **caractérisée en ce que** le pêne (7, 7a, 7b) est en contact avec les première et seconde surfaces de verrouillage (A, B) dans sa position de blocage lorsque l'intérieur de l'armoire de commande (N) est sans pression.

6. Armoire de commande (1a, 1b) selon l'une des revendications 1 à 3, **caractérisée en ce que** le pêne (7, 7a, 7b) est en contact avec les première et seconde surfaces de verrouillage (A, B) dans sa position de blocage au-dessus d'une valeur limite d'une pression (p) supérieure ou égale à 100 Pa et agissant dans l'intérieur de l'armoire de commande (N) et de manière égale sur la porte (3).

7. Armoire de commande (1a, 1b) selon l'une des revendications 1 à 6, **caractérisée en ce que** le pêne (7, 7a, 7b) présente une section transversale d'une hauteur de 15 à 35 mm et d'une épaisseur de 2 à 10 mm, dans laquelle l'épaisseur est orientée dans le sens d'ouverture (x) de la porte (3) et de manière perpendiculaire par rapport à la hauteur.

8. Armoire de commande (1a, 1b) selon l'une des revendications 1 à 7, **caractérisée en ce que** le pêne (7, 7a, 7b) présente un couple de résistance axial autour d'un axe orienté dans la direction verticale de 10 à 60 mm³.

9. Armoire de commande (1a, 1b) selon l'une des revendications 1 à 8, **caractérisée en ce que** le pêne (7, 7a, 7b) est relié de manière rotative à la serrure (6, 6a, 6b) autour d'un axe (13) orienté de manière transversale par rapport au sens d'ouverture (x) de la porte (3).

10. Armoire de commande (1a, 1b) selon l'une des revendications 1 à 9, **caractérisée en ce que** la section transversale du pêne (7, 7a, 7b) est effilée dans une zone (C) entre la serrure (6, 6a, 6b) et la première surface de verrouillage (A).
